# EUROPEAN PATENT SPECIFICATION

(11) **EP 0 339 354 B1**
(45) Date of publication and mention of the grant of the patent: **10.03.1993**
(21) Application number: 89106376.0
(22) Date of filing: 11.04.1989
(51) Int. Cl.: C05F 7/00, E03F 5/14

(54) **Method of and apparatus for treatment of sewage screenings**
Verfahren und Einrichtung für Rechengutbehandlung
Procédé et dispositif de traitement des matières retenues par la grille

(30) Priority: 20.04.1988 GB 8809357
(43) Date of publication of application: 02.11.1989
(73) Proprietor: VESSEL FABRICATIONS LIMITED, Leeds LS10 1ES (GB)
(72) Inventor: Cree, Norman, Gomersal Cleckheaton BD19 4BU (GB)
(74) Representative: Denmark, James

(56) References cited:
- EP-A- 0 181 615
- DE-A- 2 814 795
- FR-A- 2 541 669
- GB-A- 203 336
- GB-A- 2 129 698
- US-A- 2 126 168
- US-A- 3 712 550
- US-A- 4 185 680
- US-A- 4 342 650
- MANUAL OF PRACTICE, no. 8: "Wastewater treatment plant design", 1977, pages 120-122,132,452, Water Pollution Control Federation, Washington, DC, US

## Description

The invention relates to the treatment of sewage screenings, that is to say solid constituents of sewage which can be removed by "screening" or other mechanical means, prior to disposal. The removal and storage of screenings are obnoxious procedures but it is important that these solids be removed before the sewage reaches the sewage treatment works because their presence would be likely to lead to blockages in the works systems.

Removed screenings, on the other hand, are odourous, a breeding ground for flies and a feeding ground for rats and other vermin. Attempts have been made to reduce the faecal content of screenings by washing them in water, but the technique is not altogether successful; whilst the appearance of the screening may be slightly less obtectionable, odours, flies and rats are still a major problem.

According to the present invention there is provided an aerobic method of treatment of raw sewage comprising screening a flow of sewage to cause sewage screenings to collect on a screen, removing said screenings from the screen, moving said screenings to a treatment vessel, adding an aerobic bacterial culture to said vessel to promote bacterial degradation of said screenings,

characterised in that after the screenings have been removed from the screen they are suspended in a fluid and are cycled round a treatment circuit containing said treatment vessel, and in that the screenings are broken down by mechanical means to enable same to be suspended, and in that residual solids are removed from said treatment vessel.

According to a further aspect of the invention there is provided an apparatus for the treatment of raw sewage comprising:-

a screen for collecting screenings from a flowing stream of sewage,

means for removing the screenings from the screen,

a treatment vessel,

means for promoting aerobic bacteria degradation of the screenings in said vessel,

characterised in that said treatment vessel is in a treatment circuit around which the screenings can be transported whilst suspended in a fluid, and characterised by mechanical means for breaking down the screenings so that they can be so suspended in said fluid, and characterised by means enabling the removal of residual solids from said treatment vessel.

Embodiments of the invention will now be described by way of example with reference to the accompanying drawings of which:-
Figure 1 is a plan view of a sewage channel equipped with means for the removal and treatment of screenings; and
Figure 2 is a section on lines I-I of Figure 1.

In the drawings walls 2 define between them a channel for the conveyance of raw sewage, which may from time to time comprise solid constituents, in the direction of arrow 4 towards a sewage treatment works (not shown). A series of inclined and closely spaced screen bars 6 is arranged across the channel between the walls 2 in order to filter out the larger particles of solid matter and allow only liquid effluent and solid particles smaller than the spacing of the bars to pass to the sewage works. A transverse rake 8 is arranged by means not shown to move up and down the bars 6, raising the solid matter held by the bars on its up stroke so that it is lifted above the level 10 of the sewage and deposited in a transverse trough 12 which is located towards the top edge of the bars 6. In at least most respects the apparatus described above is conventional.

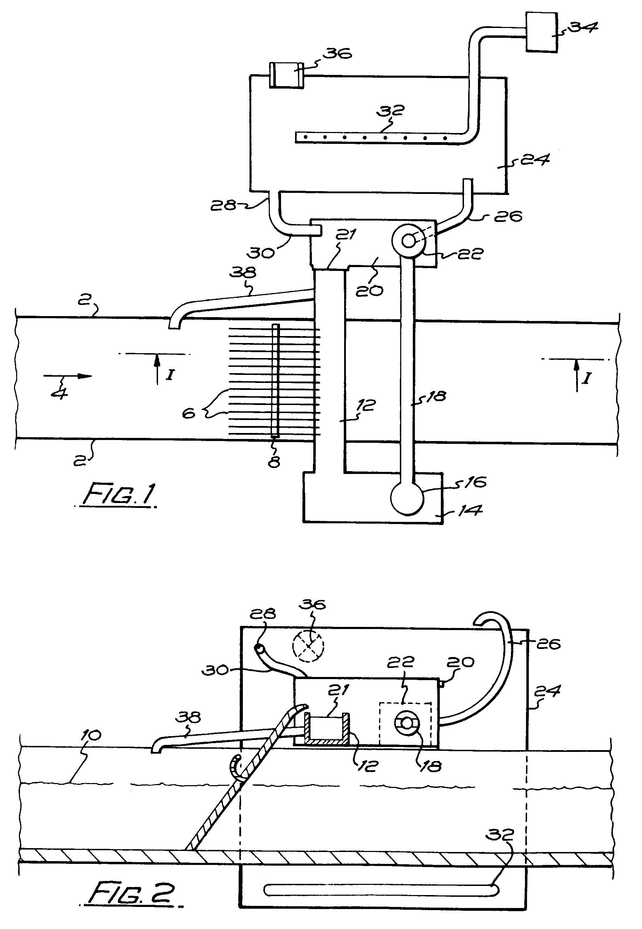

As shown particularly in Figure 1, the trough 12 terminates at one end in a trap 14 which encloses a macerator pump 16. The pump is arranged to receive material from within the trap 14 and propel it along pipe 18 to a second trap 20 from which it may overflow over weir 21 into the channel 12.

A chamber 24 is arranged adjacent to the trap 20. The size of the chamber is determined by the quantity of screenings likely to be removed from the sewage channel and the rate of biological degradation of the screenings, but typically the upper edge will be above the level of the trap 20. A pump 22 is operatively connected to the trap 20, and arranged to receive material from within the trap and discharge it via a pipe 26 into the chamber 24 at the top thereof. An overflow outlet 28 at the top edge of the chamber 24 is connected to a pipe 30 which terminates over and discharges into the trap 20.

In at least one embodiment of the apparatus, an air diffusion pipe 32 is located near the base of the chamber and this is operatively connected with an air blower/compressor 34. Adjacent to the chamber 24 is a rotary or a reciprocating screen 36 for the discharge of solid matter from the chamber. In one embodiment pump 22 is so connected that when not discharging material from trap 20 to chamber 24 it can be used to feed material from the chamber 24 to screen 36. In another embodiment an auxiliary pump is used for this purpose; in either case fluid from screen 36 discharges back to chamber 24. In yet another embodiment (not shown) material is discharged by gravity from chamber 24 into screen 36 and the fluid discharges into trap 20. An emergency overflow channel 38 leads from the channel 12 below weir 21 to the main effluent channel defined by the walls 2 upstream of the screening bars 6.

The operation of the apparatus will now be described. Effluent flowing along the channel defined by the walls 2 towards the sewage works is likely to contain different quantities of solid matter according to, for example, the time of day, and experience shows that the composition of the solid matter will also vary, but typically of the matter removed by the screen rake 8 into the channel 12, the dry solid matter will account for say 10%. A small proportion, say 20%, of the dry solids may be inorganic, whilst half of the organic matter may be non-biodegradable or, as in the case of celullosic material, only slowly biodegradable. It is a function of the apparatus as described above to promote the biological degradation of the faecal and other biodegradable components of the screenings which give rise to the nuisances previously indicated.

The rakes 8 operating over the screen bars 6 as in a conventional screening process deliver screenings with absorbed liquid into the channel 12. This may incline slightly downwardly towards the trap 14 but in any case the operation of the pump 16 ensures that the wet solids flow towards the trap 14 in the channel 12 and from the trap 14 to the trap 20 in the pipe 18. The pump 16 also acts as a macerator, comminuting at least the organic components so that they are more finely dispersed in the liquids.

The liquid with its load of comminuted solids reaching the trap 20 is delivered by the pump 22 through the pipe 26 so that it drops into the chamber 24, and the level of material in the chamber gradually increases to a level determined by the position of overflow 28.

The material in the chamber may naturally contain sufficient aerobic bacteria to effect a significant degradation of the degradable proportion of the organic content given an adequate time span, but it is anticipated that in practice, the biodegradation will have to be accelerated. To this end it is proposed that at the commencement of the process a quantity of activated sludge shall be introduced into the chamber 24 and further quantities of activated sludge may be added at intervals thereafter if and as required. Activated sludge is commonly used in sewage works and is understood to contain a high proportion of aerobic bacteria.

However, the viability of aerobic bacteria requires the presence of oxygen, and the invention antipicates that air shall be introduced from the compressor 34 through the pipe 32 so that it bubbles upwardly through the material in the chamber 24.

As has already been mentioned, the size of the tank 24 is determined in part by the quantity of screenings to be treated, but it also depends on the likely proportion of biodegradable material and the rate at which that material is degraded in the bacterial environment which obtains. As material continues to be introduced into the chamber via the pipe 26, the concentration of non-degradable solids increases. In some circumstances the chamber may overflow through the outlet 28 so that material returns via the pipe 30 into the trap 20. At this stage it will be understood that there are two interconnected circulation systems in operation, the first being flow between the traps 14 and 20 via the channel 12 and the pipe 18, and the second being the flow between the trap 20 and the chamber 24 via pipes 26 and 30. In other circumstances make-up water may need to be added to the chamber 24 to keep the contents at the preferred operating level.

Under the action of the bacteria in the chamber 24, the faecal and other biodegradable organic material is gradually consumed. The non-biodegradable organic and the small proportion of inorganic solids in the original screenings will, of course, not degrade and would remain in the chamber 24 were it not for the operation of the rotary or reciprocating screen 36. The residual solid particles removed by screen 36, being substantially free from obnoxious faecal matter, resemble a typical compost, and this solid discharge may be used for agricultural purposes or may be disposed of by tipping without the problems associated with the tipping of raw screenings.

The invention may be embodied in the modification of existing installations and thus is capable of variation from the embodiment described. Thus, for example, the macerator pump 16 may discharge directly into chamber 24 which in turn may overflow into channel 12, dispensing with trap 20 and pump 22.

What we assert is that, the quality of screenings can be improved for final disposal by the introduction of a means to allow bacterial degradation to take place in controlled conditions using standard equipment which is at present available.

Moreover, the final screenings discharge is reduced in quantity and the quality is improved so that it may be acceptable for disposal.

## Claims

1. Aerobic method of treatment of raw sewage comprising screening a flow of sewage to cause sewage screenings to collect on a screen, removing said screenings from the screen, moving said screenings to a treatment vessel, adding an aerobic bacterial culture to said vessel to promote bacterial degradation of said screenings,
characterised in that after the screenings have been removed from the screen they are suspended in a fluid and are cycled round a treatment circuit containing said treatment vessel, and in that the screenings are broken down by mechanical means to enable same to be suspended, and in that residual solids are removed from said treatment vessel.

2. A method of treatment of raw sewage according to Claim 2 wherein said degradation is promoted by the forced aeration of the removed screenings.

3. An apparatus for the treatment of raw sewage comprising:-
a screen (6) for collecting screenings from a flowing stream (4) of sewage,
means (8) for removing the screenings from the screen,
a treatment vessel (24),
means (32) for promoting aerobic bacteria degradation of the screenings in said vessel (24)
characterised in that said treatment vessel is a treatment vessel (24) is in a treatment circuit (20,26,24,30) around which the screenings can be transported whilst suspended in a fluid, and characterised by mechanical means (16) for breaking down the screenings so that they can be so suspended in said fluid, and characterised by means (36) enabling the removal of residual solids from said treatment vessel.

4. Apparatus according to Claim 3, wherein the means defining a treatment circuit includes trough means (12) transverse to said stream and discharging into a first trap means (14); said mechanical means is comminuting means (16) in said first trap means (14) discharging into second trap means (20), and said second trap means (20) overflowing into said trough means (12) to define a first circulation system.

5. Apparatus according to Claim 3 or 4 wherein means defining a treatment circuit includes pump means (22) for discharging screenings into said vessel (24) and overflow means (28) for discharging surplus screenings from said vessel back to said pump means (22), to define a second circulation system.

6. Apparatus according to Claims 4 and 5 wherein said pump means (22) is located in said second trap (20).

7. Apparatus according to any one of Claims 3 to 6 wherein the means for promoting bacteria degredation comprises a means (32) for introducing air into the treatment vessel (24).

## Patentansprüche

1. Aerobisches Verfahren für Behandlung von Abwasser, einbegreifend Absiebung eines Abwasserstromes um die Absetzung Rechengutes auf einem Rechen zu erzielen, Entfernung des genannten Rechengutes von dem Rechen, Übertragung des genannten Rechengutes in einen Behandlungsbehälter, Zusats einer aerobischen Bakterienkultur zu dem genannten Behälter um den bakteriellen Abbau des genannten Rechengutes zu fördern, **dadurch gekennzeichnet**, dass nachdem das Rechengut von den Rechen entfernt geworden ist, es in eine Flüssigkeit suspendiert wird und in einem Behandlungskreislauf, der das genannte Behandlungsbehälter umfasst, zirkuliert wird, und dadurch dass restierende feste Körper aus dem Behandlungsbehälter entfernt werden.

2. Ein Verfahren für Abwasserbehandlung nach Anspruch 1, in dem der genannte Abbau mittels künstlicher Lüftung des entfernten Rechengutes gefördert wird.

3. Eine Einrichtung für die Behandlung von Rechengut einbegreifend:-
ein Rechen (6) für die Absetzung von Rechengut eines strömenden Abwasserstromes (4),
Mittel (8) für die Entfernung Rechengutes von dem Rechen,
einen Behandlungsbehälter (24),
Mittel (32) um den aerobischen Bakterienabbau des Rechengutes in dem genannten Behälter zu fördern,
**dadurch gekennzeichnet**, dass der genannte Behandlungsbehälter (24) in einem Behandlungskreislauf (20, 26, 24, 30) befindlich ist, in dem das Rechengut, während es in einer Flüssigkeit suspendiert ist, herumtransportiert sein kann, und gekennzeichnet durch mechanische Mittel (16) für die Zerteilung des Rechengutes um dass es auf diese Weise in der genannte Flüssigkeit suspendiert sein kann, und gekennzeichnet durch Mittel (36) die die Entfernung von restierenden festen Körper aus dem genannten Behandlungsbehälter ermöglicht.

4. Eine Einrichtung nach Anspruch 3, in der die Mittel die einen Behandlungskreislauf definieren ein Trogmittel inkludieren, das transversal zu dem genannten Strom eingerichtet ist und das in einem ersten Fallmittel mündet, die genannten mechanischen Mittel Zerkleinerungsmittel (16) in dem ersten Fallmittel, das in einem zweiten Fallmittel (20) mündet, sind, und dass das genannte zweite Fallmittel (20) in das genannte Trogmittel (12) überströmt, um einen ersten Kreislauf zu definieren.

5. Eine Einrichtung nach Anspruch 3 oder 4, in der Mittel die einen Behandlungskreislauf definieren Umwälzmittel (22), um das Rechengut in den genannten Behälter (24) abzugeben, und Überflussmittel (28) um überschüssiges Rechengut von dem genannten Behälter zu den genannten Umwälzmittel (22) wiederpumpen zu lassen, inkludieren, um einen zweiten Kreislauf zu definieren.

6. Eine Einrichtung nach Anspruch 4 oder 5, in der die genannten Umwälzmittel (22) in der genannten zweiten Falle befindlich sind.

7. Eine Einrichtung nach einem der Ansprüche 3 bis 6, in der die Mittel für Förderung von Bakterienabbau ein Mittel (32) für Lufteinlass in den Behandlungsbehälter inkludieren.

## Revendications

1. Procédé aérobie de traitement d'eaux d'égouts brutes, comprenant le criblage d'un flux d'eaux d'égouts pour recueillir les déchets de criblage des eaux d'égouts sur un crible, l'élimination desdits déchets de criblage du crible, le transport desdits déchets de criblage vers un récipient de traitement, l'addition d'une culture bactérienne aérobie audit récipient pour favoriser la dégradation bactérienne desdits déchets de criblage,
caractérisé en ce que, après que les déchets de criblage ont été retirés du crible, ils sont mis en suspension dans un fluide et sont soumis à plusieurs cycles de traitement dans un circuit contenant ledit récipient de traitement, et en ce que les déchets de criblage sont broyés par des moyens mécaniques pour permettre à ceux-ci d'être mis en suspension, et en ce que les matières solides résiduelles sont retirées dudit récipient de traitement.

2. Procédé de traitement d'eaux d'égouts brutes selon la revendication 1, dans lequel ladite dégradation est favorisée par l'aération forcée des déchets de criblage retirés.

3. Appareil pour le traitement d'eaux d'égouts brutes, comprenant :
- un crible (6) pour recueillir les déchets de criblage provenant d'un courant (4) d'eaux d'égouts,
- des moyens (8) pour retirer les déchets de criblage du crible,
- un récipient de traitement (24),
- des moyens (32) pour favoriser la dégradation bactérienne aérobie des déchets de criblage dans ledit récipient (24),
caractérisé en ce que ledit récipient de traitement est un récipient de traitement (24) dans un circuit de traitement (20,26,24,30), dans lequel les déchets de criblage peuvent être transportés alors qu'ils sont en suspension dans un fluide, et caractérisé par des moyens mécaniques (16) pour broyer les déchets de criblage de sorte qu'ils peuvent être ainsi mis en suspension dans ledit fluide, et caractérisé par des moyens (36) permettant l'élimination des matières solides résiduelles dudit récipient de traitement.

4. Appareil selon la revendication 3, dans lequel les moyens définissant un circuit de traitement incluent des moyens formant un canal (12) transversaux audit courant et débouchant dans des premiers moyens de piégeage (14) ; lesdits moyens mécaniques sont des moyens de pulvérisation (16) dans lesdits premiers moyens de piégeage (14) débouchant dans des seconds moyens de piégeage (20), et lesdits seconds moyens de piégeage (20) s'écoulant par un trop-plein dans lesdits moyens formant un canal (12) pour définir un premier système de circulation.

5. Appareil selon la revendication 3 ou 4, dans lequel les moyens définissant un circuit de traitement incluent des moyens de pompage (22) pour décharger les déchets de criblage dans ledit récipient (24) et des moyens de trop-plein (28) pour décharger le surplus de déchets de criblage dudit récipient vers lesdits moyens de pompage (22), pour définir un second système de circulation.

6. Appareil selon les revendications 4 et 5, dans lequel lesdits moyens de pompage (22) sont situés dans ledit second piège (20).

7. Appareil selon l'une quelconque des revendications 3 à 6, dans lequel les moyens pour favoriser la dégradation bactérienne comprennent des moyens (32) pour introduire de l'air dans le récipient de traitement (24).
